(19) Europäisches Patentamt / European Patent Office / Office européen des brevets

(11) **EP 4 318 036 A1**

(12) **EUROPÄISCHE PATENTANMELDUNG**

(43) Veröffentlichungstag:
   **07.02.2024   Patentblatt 2024/06**

(21) Anmeldenummer: **22188272.3**

(22) Anmeldetag: **02.08.2022**

(51) Internationale Patentklassifikation (IPC):
   **G01S 7/497** (2006.01)   **G01S 7/481** (2006.01)
   **G01S 17/08** (2006.01)   **G01S 17/875** (2020.01)

(52) Gemeinsame Patentklassifikation (CPC):
   **G01S 7/4972; G01S 7/4817; G01S 17/08;
   G01S 17/875**

(84) Benannte Vertragsstaaten:
   **AL AT BE BG CH CY CZ DE DK EE ES FI FR GB
   GR HR HU IE IS IT LI LT LU LV MC MK MT NL NO
   PL PT RO RS SE SI SK SM TR**
   Benannte Erstreckungsstaaten:
   **BA ME**
   Benannte Validierungsstaaten:
   **KH MA MD TN**

(71) Anmelder: **Siemens Aktiengesellschaft
   80333 München (DE)**

(72) Erfinder:
   • **Benkert, Johannes
     90763 Fürth (DE)**
   • **Mielke, Ronny
     91341 Röttenbach (DE)**

   • **Recktenwald, Alois
     91074 Herzogenaurach (DE)**
   • **Schaub, Markus
     90522 Oberasbach (DE)**
   • **Teriet, Florian
     91052 Erlangen (DE)**
   • **Vogel, Julian
     90766 Fürth (DE)**
   • **Wielens, Bernd
     48683 Ahaus (DE)**
   • **de Carvalho Ferreira, Fabricio
     91056 Erlangen (DE)**

(74) Vertreter: **Siemens Patent Attorneys
   Postfach 22 16 34
   80506 München (DE)**

(54)   **ÜBERWACHEN DER AUSRICHTUNG EINES LASERSCANNERS**

(57)   Die Erfindung betrifft ein Verfahren zum Überwachen der Ausrichtung eines Laserscanners (3, 5). Bei dem Verfahren werden mit dem Laserscanner (3, 5) wiederholt Abstände des Laserscanners (3, 5) von jeweils mehreren Messpunkten auf verschiedenen planaren Außenoberflächen jeweils eines Messobjekts (9) ermittelt, wobei alle Messobjekte (9) dieselbe geometrische Form mit planaren Außenoberflächen aufweisen und derart angeordnet sind, dass die Normalenvektoren (11, 13) der Außenoberflächen aller Messobjekte (9) definierte Richtungen in einem festgelegten ersten Bezugssystem (K) aufweisen. Aus den ermittelten Abständen werden für jedes Messobjekt (9) die Richtungen von Normalenvektoren (11, 13) von Außenoberflächen des Messobjekts (9) in einem auf den Laserscanner (3, 5) bezogenen zweiten Bezugssystem (K1, K2) bestimmt. Auf eine Änderung der Ausrichtung des Laserscanners (3, 5) wird geschlossen, wenn sich die Richtung wenigstens eines Normalenvektors (11, 13) in dem zweiten Bezugssystem (K1, K2) signifikant, beispielsweise um mehr als einen vorgegebenen Winkel, ändert.

FIG 1

EP 4 318 036 A1

**Beschreibung**

Die Erfindung betrifft ein Verfahren zum Überwachen der Ausrichtung eines Laserscanners, insbesondere im Umfeld eines Krans.

Für eine Vielzahl unterschiedlicher Automatisierungslösungen im Umfeld eines Krans werden 3D-Sensoren zur Vermessung der Umgebung verwendet. Typischerweise handelt es sich hierbei um Laserscanner, insbesondere so genannte Lidar-Sensoren (Lidar: Abkürzung für englisch Light detection and ranging oder Light imaging, detection and ranging). Ein derartiger Laserscanner sendet Laserpulse aus, die von Objekten teilweise reflektiert werden. Aus der Laufzeit eines Laserpulses zwischen dem Aussenden des Laserpulses und dem Empfangen des reflektierten Teils des Laserpulses kann die Entfernung des Laserscanners von dem den Laserpuls jeweils reflektierenden Ort bestimmt werden. Durch Variieren der Richtungen der ausgesendeten Laserpulse können Objekte in der Umgebung des Laserscanners erfasst ("gescannt") werden.

Aufgrund von perspektivischen Effekten wie Verschattungen oder Spiegelungen sowie aus Redundanzgründen zur Steigerung der Robustheit, Genauigkeit oder Performance werden häufig Sensorsysteme mit mehreren Laserscannern eingesetzt. Durch jeden Laserscanner werden Positionen in einem auf den Laserscanner bezogenen Bezugssystem erfasst. Diese Positionen müssen in ein gemeinsames Bezugssystem ("Weltkoordinatensystem") transformiert werden. Dazu ist anfänglich eine Kalibrierung der Laserscanner erforderlich, über die die Position und die Ausrichtung der Laserscanner bezüglich des Weltkoordinatensystems erfasst wird.

Durch Materialverformung, aber auch durch Stöße und Schocks, die während des Betriebs des Krans auftreten, kann sich jedoch die Ausrichtung eines Laserscanners ändern, so dass die Ausrichtung nicht mehr mit der anfänglich erfassten Kalibrierung übereinstimmt. Dies hat zur Folge, dass die von dem Laserscanner erfassten Messpunkte falsch in das Weltkoordinatensystem transformiert werden. Dementsprechend arbeitet die Automatisierungslösung mit falschen Positionsdaten, wodurch Objekte, beispielsweise Container, an falschen Positionen erkannt werden. Als Folge können die Objekte beispielsweise nicht mehr exakt gestapelt werden, aber auch Kollisionen entstehen, was zur Unterbrechung des Betriebs führen kann.

Derzeit wird die anfängliche Kalibrierung eines Laserscanners beispielsweise mit einem definierten Kalibrierobjekt ausgeführt. In einem manuellen Vorgang wird dieses Kalibrierobjekt an einer definierten Position und mit einer definierten Ausrichtung mit dem Laserscanner vermessen. In den von dem Laserscanner erfassten Sensordaten wird das Kalibrierobjekt lokalisiert und hierüber die Transformation zwischen dem auf den Laserscanner bezogenen Bezugssystem und dem Weltkoordinatensystem bestimmt. Im laufenden Betrieb des Krans wird eine veränderte Ausrichtung des Laserscanners dadurch erkannt, dass die Automatisierungslösung nicht mehr wie erwartet funktioniert (geringere Genauigkeit oder sogar Ausfall des Systems). In diesem Fall muss die Ausrichtung des Laserscanners manuell überprüft und der Laserscanner muss erforderlichenfalls neu eingemessen werden. Dies hat zur Folge, dass der Kran für die Zeit der Rekalibrierung nicht mehr verwendet werden kann und das Sensorsystem aufwändig neu eingemessen werden muss, beispielsweise unter Zuhilfenahme eines externen Messsystems, z. B. unter Verwendung eines Theodoliten.

Der Erfindung liegt die Aufgabe zugrunde, ein verbessertes Verfahren zum Überwachen der Ausrichtung eines Laserscanners, insbesondere im Umfeld eines Krans, anzugeben.

Die Aufgabe wird erfindungsgemäß durch ein Verfahren mit den Merkmalen des Anspruchs 1 gelöst.

Vorteilhafte Ausgestaltungen der Erfindung sind Gegenstand der Unteransprüche.

Bei dem erfindungsgemäßen Verfahren zum Überwachen der Ausrichtung eines Laserscanners werden mit dem Laserscanner wiederholt Abstände des Laserscanners von jeweils mehreren Messpunkten auf verschiedenen planaren Außenoberflächen jeweils eines Messobjekts ermittelt, wobei alle Messobjekte dieselbe geometrische Form mit planaren Außenoberflächen aufweisen und derart angeordnet sind, dass die Normalenvektoren der Außenoberflächen aller Messobjekte definierte Richtungen in einem festgelegten ersten Bezugssystem aufweisen. Aus den ermittelten Abständen werden für jedes Messobjekt die Richtungen von Normalenvektoren von Außenoberflächen des Messobjekts in einem auf den Laserscanner bezogenen zweiten Bezugssystem bestimmt. Auf eine Änderung der Ausrichtung des Laserscanners wird geschlossen, wenn sich die Richtung wenigstens eines dabei bestimmten Normalenvektors in dem zweiten Bezugssystem signifikant, beispielsweise um mehr als einen vorgegebenen Winkel, ändert.

Die Messobjekte sind dabei beispielsweise herkömmliche Container. Das Verfahren ermöglicht somit, die Ausrichtung eines Laserscanners ohne ein spezielles Kalibrierobjekt zu bestimmen. Dadurch ermöglicht das Verfahren insbesondere vorteilhaft verkürzte Inbetriebnahmezeiten von Anlagen mit Laserscannern. Ferner ermöglicht das Verfahren, während des Betriebs einer derartigen Anlage zu überwachen, ob sich die Ausrichtung eines Laserscanners geändert hat, und somit, ob eine anfänglich eingemessene Kalibrierung des Laserscanners noch gültig ist.

Bei einer Ausgestaltung des Verfahrens werden die Richtungen der Normalenvektoren von Außenoberflächen eines Messobjekts in dem zweiten Bezugssystem aus einer Vielzahl von Messpunktrichtungen bestimmt, die jeweils einem Messpunkt zugeordnet sind und jeweils als ein Eigenvektor einer Scatter-Matrix bestimmt werden, die aus den Abständen des Laserscanners von dem Messpunkt und ihm benachbarten Messpunkten gebildet wird. Beispielsweise werden dabei aus den für ein Messobjekt bestimmten Messpunktrichtungen mit einem agglomerativen Clustering-Verfahren Cluster-Schwerpunkte bestimmt und Außenoberflächen des Messobjekts wird jeweils ein Cluster-Schwerpunkt zugeordnet.

Bei der vorgenannten Ausgestaltung des Verfahrens werden somit für verschiedene Messpunkte auf planaren Außenoberflächen eines Messobjekts jeweils Messpunktrichtungen bestimmt. Die Verteilung dieser Messpunktrichtungen wird mit einem Clustering-Verfahren analysiert, um die Orientierungen der Außenoberflächen des Messobjekts zu bestimmen, wobei die Orientierung einer Außenoberfläche als eine Hauptorientierung von Messpunktrichtungen bestimmt wird. Die bei dem Clustering-Verfahren bestimmten Cluster-Schwerpunkte ergeben die Richtungen der Normalenvektoren der Außenoberflächen des jeweiligen Messobjekts.

Bei einer weiteren Ausgestaltung der Erfindung wird das Verfahren für wenigstens zwei Laserscanner angewendet. Auf eine fehlerhafte Ausrichtung eines Laserscanners wird geschlossen, wenn für ein Messobjekt wenigstens zwei mit verschiedenen Laserscannern ermittelte, zueinander korrespondierende Cluster-Schwerpunkte signifikant voneinander abweichen. Diese Ausgestaltung der Erfindung ermöglicht vorteilhaft, eine geänderte Ausrichtung eines Laserscanners durch einen Vergleich der für verschiedene Laserscanner bestimmten Cluster-Schwerpunkte zu erkennen.

Bei einer weiteren Ausgestaltung der Erfindung wird im Fall, dass sich die Ausrichtung eines Laserscanners ändert, eine Transformationsmatrix bestimmt, die die Änderung der Ausrichtung beschreibt. Mit dem Laserscanner ermittelte Positionen und Ausrichtungen von Objekten werden dann beispielsweise entsprechend der Transformationsmatrix korrigiert. Dies ermöglicht eine Korrektur der mit dem Laserscanner ermittelten Positionen und Ausrichtungen von Objekten durch eine mathematische Transformation dieser Positionen und Ausrichtungen mit Hilfe der Transformationsmatrix, so dass die Korrektur ohne eine Neukalibrierung des Laserscanners erfolgt. Eine derartige Korrektur eignet sich vor allem für kleine Änderungen der Ausrichtung des Laserscanners. Bei größeren Änderungen wird der Laserscanner vorzugsweise neu eingemessen.

Bei einer weiteren Ausgestaltung der Erfindung sind die Messobjekte quaderförmig. Insbesondere eignen sich beispielsweise Container als Messobjekte.

Bei einer weiteren Ausgestaltung der Erfindung ist der Laserscanner ein Lidar-Sensor. Diese Ausgestaltung der Erfindung berücksichtigt, dass Lidar häufig zur Bestimmung der Positionen und Ausrichtungen von Objekten eingesetzt wird.

Bei einer weiteren Ausgestaltung der Erfindung wird das Verfahren in einem Umfeld eines Krans ausgeführt. Insbesondere kann das Verfahren vorteilhaft im Umfeld eines Krans eingesetzt werden, mit dem Container transportiert werden, da sich Container besonders vorteilhaft als Messobjekte eignen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:

FIG 1 ein Umfeld eines Krans, in dem zwei Laserscanner angeordnet sind,

FIG 2 ein Ablaufdiagramm eines Ausführungsbeispiels des erfindungsgemäßen Verfahrens,

FIG 3 Transformationen zwischen Bezugssystemen.

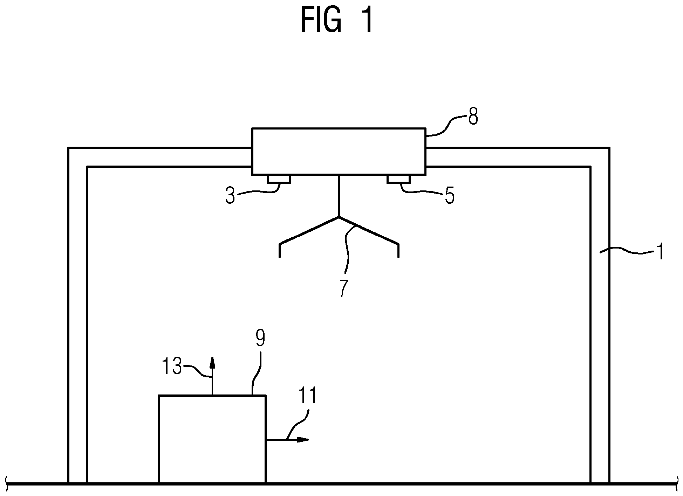

Figur 1 (FIG 1) zeigt beispielhaft und schematisch ein Umfeld eines Krans 1, in dem zwei Laserscanner 3, 5 angeordnet sind. Der Kran 1 weist eine Greifeinrichtung 7 auf und ist eingerichtet, Objekte zu transportieren. Die Greifeinrichtung 7 ist an einer Laufkatze 8 des Krans 1 angeordnet und durch diese verfahrbar. Die beiden Laserscanner 3, 5 sind beispielsweise ebenfalls an der Laufkatze 8 angeordnet, können jedoch auch an anderen Stellen des Krans 1 angeordnet sein. Gezeigt sind ferner ein Messobjekt 9, das ein quaderförmiger Container ist, und zwei Normalenvektoren 11, 13 von Außenoberflächen des Messobjekts 9. Das Messobjekt 9 ist derart angeordnet, dass die Normalenvektoren 11, 13 seiner Außenoberflächen definierte Richtungen in einem festgelegten ersten Bezugssystem ("Weltkoordinatensystem") aufweisen.

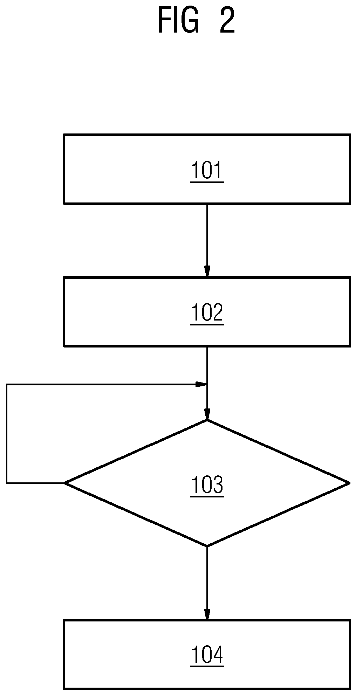

Figur 2 (FIG 2) zeigt ein Ablaufdiagramm eines Ausführungsbeispiels des erfindungsgemäßen Verfahrens mit Verfahrensschritten 101 bis 104 zum Überwachen der Ausrichtung der Laserscanner 3, 5.

In einem ersten Verfahrensschritt 101 werden mit jedem Laserscanner 3, 5 Abstände des Laserscanners 3, 5 von jeweils mehreren Messpunkten auf verschiedenen planaren Außenoberflächen des Messobjekts 9 ermittelt. Hierbei müssen sich die Scanbereiche der Laserscanner 3, 5 nicht überlappen. Es müssen lediglich von beiden Laserscannern 3, 5 dieselben Außenoberflächen des Messobjekts 9 erfasst werden. Anschließend wird jedem Messpunkt x eine Messpunktrichtung zugeordnet. Zu diesem Zweck werden für den Messpunkt x Messpunkte $x_i$ bestimmt, deren Abstand von dem Messpunkt x kleiner als ein vorgegebener Schwellenwert r ist. Die Menge dieser Messpunkte wird mit A bezeichnet:

$$A = \{ x_i \mid \|x_i - x\| < r \}$$

Nun wird als Messpunktrichtung n für den Messpunkt x die Richtung eines Normalenvektors einer Ebene e bestimmt, welche die Summe der quadrierten Abstände zwischen der Ebene und den Punkten der Menge A minimiert. Hierzu wird zunächst das Zentrum c der Menge A bestimmt gemäß

$$c = \frac{1}{n} \sum_{i=1}^{n} x_i \ , x_i \in A.$$

Hier wurde angenommen, dass die Menge A die Mächtigkeit n hat. Nun wird die relative Lage der Punkte $x_i$ zu diesem Zentrum c berechnet gemäß

$$y_i = x_i - c.$$

Die ermittelten relativen Punktlagen $y_i$ werden nun in eine Scatter-Matrix S umgerechnet gemäß

$$S = YY^T \text{mit } Y = (y_1, y_2, ..., y_n),$$

wobei $YY^T$ das dyadische Produkt des Vektors $Y = (y_1, y_2, ..., y_n)$ mit sich selbst bezeichnet. Die gesuchte Messpunktrichtung n zum Messpunkt x ist der normierte Eigenvektor zum kleinsten Eigenwert der Matrix S und kann in bekannter Weise berechnet werden.

In einem zweiten Verfahrensschritt 102 werden für jeden Laserscanner 3, 5 aus den in dem ersten Verfahrensschritt 101 bestimmten Messpunktrichtungen mit einem agglomerativen Clustering-Verfahren Cluster-Schwerpunkte bestimmt und Außenoberflächen des Messobjekts 9 wird jeweils ein Cluster-Schwerpunkt zugeordnet. Aus den für den ersten Laserscanner 3 bestimmten Cluster-Schwerpunkten wird eine erste Transformation T1 ermittelt, mit der in einem auf den ersten Laserscanner 3 bezogenen Bezugssystem K1 ermittelte Positionen in das Weltkoordinatensystem K transformiert werden. Entsprechend wird aus den für den zweiten Laserscanner 5 bestimmten Cluster-Schwerpunkten eine zweite Transformation T2 ermittelt, mit der in einem auf den zweiten Laserscanner 5 bezogenen Bezugssystem K2 ermittelte Positionen in das Weltkoordinatensystem K transformiert werden. Ferner wird daraus eine dritte Transformation T3 ermittelt, die die Bezugssysteme K1 und K2 aufeinander abbildet beziehungsweise Positionen in dem Bezugssystem K1 in Positionen in dem Bezugssystem K2 transformiert. Die Transformationen T1 und T2 bilden die anfänglichen Kalibrierungen der beiden Laserscanner 3, 5.

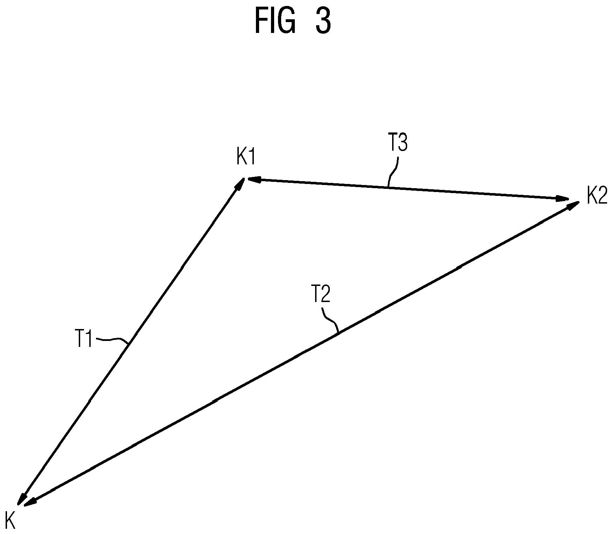

Figur 3 (FIG 3) zeigt symbolisch die Transformationen T1 bis T3 zwischen den Bezugssystemen K, K1, K2.

In einem dritten Verfahrensschritt 103 werden zunächst die beiden ersten Verfahrensschritte 101, 102 für die beiden Laserscanner 3, 5 wiederholt, jedoch gegebenenfalls für ein anderes Messobjekt 9, das aber wie das in den beiden ersten Verfahrensschritten 101, 102 verwendete Messobjekt 9 geometrisch gestaltet und ausgerichtet ist. Anschließend wird geprüft, ob sich die dabei für einen Laserscanner 3, 5 ermittelten Cluster-Schwerpunkte gegenüber den in dem zweiten Verfahrensschritt 102 für diesen Laserscanner 3, 5 ermittelten Cluster-Schwerpunkten signifikant geändert haben oder sich die dritte Transformation T3 zwischen den Bezugssystemen K1, K2 signifikant, beispielsweise um mehr als einen vorgegebenen Winkel, geändert hat. Im Fall einer signifikanten Änderung wird auf eine Änderung der Ausrichtung eines Laserscanners 3, 5 geschlossen und ein vierter Verfahrensschritt 104 ausgeführt. Andernfalls wird der dritte Verfahrensschritt 103 wiederholt.

In dem vierten Verfahrensschritt 104 wird die in dem dritten Verfahrensschritt 103 erkannte fehlerhafte Kalibrierung während des regulären Betriebs des Krans 1 zumindest teilweise kompensiert.

Hierfür ist es erforderlich, die Cluster-Schwerpunkte im kalibrierten Zustand abzuspeichern. Über einen mathematischen Optimierungsterm können nun zwei Bedingungen optimiert werden:

Bedingung A:

Zum einen müssen die den Cluster-Schwerpunkten jeweils zugeordneten normalisierten Richtungen orthogonal zueinander orientiert sein, da die zugehörigen Ebenen (Container-Flächen) orthogonal zueinander sind. Für je zwei verschiedene Orientierungspaare $\vec{o_i}, \vec{o_j}$ muss somit gelten:

$$\vec{o_i} \perp \vec{o_j} \rightarrow \vec{o_i} \cdot \vec{o_j} = 0$$

Bedingung B:

Zusätzlich wird eine Transformationsmatrix R gesucht, welche die Differenz zwischen aktueller Clusterlage c und gewünschter Clusterlage $\hat{c}$ minimiert gemäß

$$\left\| Rc - \hat{c} \right\|^2 = min$$

Über eine Eigenwertzerlegung (englisch Singular Value Decomposition) kann hierfür eine Lösung bestimmt werden. Die Transformationsmatrix R stellt hierbei die Rotation dar, um welche die Kalibrierung angepasst werden muss.

Hierbei muss berücksichtigt werden, dass die Laserscanner 3, 5 - unabhängig von ihrer Montageposition - skalierungsgleich abbilden. Die Lösung muss somit nicht mehr skaliert, jedoch muss der Fall einer negativen Dimensions-Skalierung (-1) abgeprüft werden. Eine Spiegelung stellt zwar mathematisch eine gültige Lösung dar, kann durch die Montageposition jedoch in Realität nie auftreten.

Das Verfahren wurde oben am Beispiel von zwei Laserscannern 3, 5 beschrieben, kann aber in analoger Weise für jede andere Anzahl von Laserscannern 3, 5, insbesondere auch für nur einen Laserscanner 3, 5, durchgeführt werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zum Überwachen der Ausrichtung eines Laserscanners (3, 5), wobei

    - mit dem Laserscanner (3, 5) wiederholt Abstände des Laserscanners (3, 5) von jeweils mehreren Messpunkten auf verschiedenen planaren Außenoberflächen jeweils eines Messobjekts (9) ermittelt werden,
    wobei alle Messobjekte (9) dieselbe geometrische Form mit planaren Außenoberflächen aufweisen und derart angeordnet sind, dass die Normalenvektoren (11, 13) der Außenoberflächen aller Messobjekte (9) definierte Richtungen in einem festgelegten ersten Bezugssystem (K) aufweisen,
    - aus den ermittelten Abständen für jedes Messobjekt (9) die Richtungen von Normalenvektoren (11, 13) von Außenoberflächen des Messobjekts (9) in einem auf den Laserscanner (3, 5) bezogenen zweiten Bezugssystem (K1, K2) bestimmt werden, und
    - auf eine Änderung der Ausrichtung des Laserscanners (3, 5) geschlossen wird, wenn sich die Richtung wenigstens eines Normalenvektors (11, 13) in dem zweiten Bezugssystem (K1, K2) signifikant, beispielsweise um mehr als einen vorgegebenen Winkel, ändert.

2. Verfahren nach Anspruch 1, wobei die Richtungen der Normalenvektoren (11, 13) von Außenoberflächen eines Messobjekts (9) in dem zweiten Bezugssystem (K1, K2) aus einer Vielzahl von Messpunktrichtungen bestimmt werden, die jeweils einem Messpunkt zugeordnet sind und jeweils als ein Eigenvektor einer Scatter-Matrix bestimmt werden, die aus den Abständen des Laserscanners (3, 5) von dem Messpunkt und dem Messpunkt benachbarten Messpunkten gebildet wird.

3. Verfahren nach Anspruch 2, wobei aus den für ein Messobjekt (9) bestimmten Messpunktrichtungen mit einem agglomerativen Clustering-Verfahren Cluster-Schwerpunkte bestimmt werden und Außenoberflächen des Messobjekts (9) jeweils ein Cluster-Schwerpunkt zugeordnet wird, um die Richtung des Normalenvektors der jeweiligen Außenoberfläche zu bestimmen.

4. Verfahren nach einem Anspruch 3, das für wenigstens zwei Laserscanner (3, 5) angewendet wird, wobei auf eine fehlerhafte Ausrichtung eines Laserscanners (3, 5) geschlossen wird, wenn für ein Messobjekt (9) wenigstens zwei mit verschiedenen Laserscannern (3, 5) ermittelte, zueinander korrespondierende Cluster-Schwerpunkte signifikant voneinander abweichen.

5. Verfahren nach einem der vorhergehenden Ansprüche, wobei im Fall, dass sich die Ausrichtung des Laserscanners (3, 5) ändert, eine Transformationsmatrix bestimmt wird, die die Änderung der Ausrichtung beschreibt.

6. Verfahren nach Anspruch 5, wobei mit dem Laserscanner (3, 5) ermittelte Positionen und Ausrichtungen von Objekten entsprechend der Transformationsmatrix korrigiert werden.

7. Verfahren nach einem der vorhergehenden Ansprüche 1 bis 4, wobei im Fall, dass sich die Ausrichtung des Laserscanners (3, 5) ändert, der Laserscanner (3, 5) neu eingemessen wird.

8. Verfahren nach einem der vorhergehenden Ansprüche, wobei die Messobjekte (9) quaderförmig sind.

9. Verfahren nach einem der vorhergehenden Ansprüche, wobei der Laserscanner (3, 5) ein Lidar-Sensor ist.

10. Verfahren nach einem der vorhergehenden Ansprüche, das in einem Umfeld eines Krans (1) ausgeführt wird.

# FIG 1

# FIG  2

```
┌─────────────────────────┐
│           101           │
└─────────────────────────┘
             │
             ▼
┌─────────────────────────┐
│           102           │
└─────────────────────────┘
             │
      ┌──────┼──────┐
      │      ▼
      │    ╱─────╲
      │   ╱  103  ╲
      └──╲        ╱
          ╲──────╱
             │
             ▼
┌─────────────────────────┐
│           104           │
└─────────────────────────┘
```

FIG 3

**Europäisches Patentamt**
**European Patent Office**
**Office européen des brevets**

# EUROPÄISCHER RECHERCHENBERICHT

**Nummer der Anmeldung**

**EP 22 18 8272**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2008 019373 A1 (SIEMENS AG [DE]) 22. Januar 2009 (2009-01-22) * Abbildung 1 * * Zusammenfassung * * Absätze [0001], [0003], [0007], [0010], [0026], [0036], [0039] * ----- | 1-10 | INV. G01S7/497 G01S7/481 G01S17/08 G01S17/875 |
| A | EP 2 910 512 A1 (SIEMENS AG [DE]; LASE IND LASERTECHNIK GMBH [DE]) 26. August 2015 (2015-08-26) * Abbildung 1 * * Zusammenfassung * * Absätze [0003], [0006], [0011] * ----- | 1-10 | |

**RECHERCHIERTE SACHGEBIETE (IPC)**

**G01S**

Der vorliegende Recherchenbericht wurde für alle Patentansprüche erstellt

| Recherchenort | Abschlußdatum der Recherche | Prüfer |
|---|---|---|
| **München** | **19. Januar 2023** | **Alberga, Vito** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 18 8272

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-01-2023

| Im Recherchenbericht angeführtes Patentdokument | Datum der Veröffentlichung | Mitglied(er) der Patentfamilie | Datum der Veröffentlichung |
|---|---|---|---|
| DE 102008019373 A1 | 22-01-2009 | KEINE | |
| EP 2910512 A1 | 26-08-2015 | CN 104860203 A<br>EP 2910512 A1 | 26-08-2015<br>26-08-2015 |

EPO FORM P0461

Für nähere Einzelheiten zu diesem Anhang : siehe Amtsblatt des Europäischen Patentamts, Nr.12/82